(19) Europäisches Patentamt
European Patent Office
Office européen des brevets

(11) **EP 4 733 164 A2**

(12) # EUROPEAN PATENT APPLICATION

(43) Date of publication:
**29.04.2026 Bulletin 2026/18**

(51) International Patent Classification (IPC):
***B60W 30/10*** (2006.01)  ***B60W 50/10*** (2012.01)
***B60W 60/00*** (2020.01)

(21) Application number: **26165816.5**

(52) Cooperative Patent Classification (CPC):
**B60W 30/10; B60W 50/10; B60W 60/001;**
B60W 2050/0031; B60W 2050/006; B60W 2520/06;
B60W 2540/18; B60W 2552/53; B60W 2556/10;
B60W 2556/50

(22) Date of filing: **18.03.2026**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **19.03.2025 CN 202510330495**

(71) Applicant: **Apollo Intelligent Driving Technology
(Beijing) Co., Ltd.
Haidian District
Beijing 100085 (CN)**

(72) Inventors:
• **ZHANG, Yuanyu
Beijing, 100085 (CN)**

• **YANG, Tianhang
Beijing, 100085 (CN)**
• **XIE, Yuanfan
Beijing, 100085 (CN)**
• **GAO, Han
Beijing, 100085 (CN)**
• **SHEN, Qiyue
Beijing, 100085 (CN)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **VEHICLE CONTROL METHOD AND APPARATUS, ELECTRONIC DEVICE, AND AUTONOMOUS VEHICLE**

(57) The present disclosure provides a vehicle control method and apparatus, an electronic device, and an autonomous vehicle, which relate to the field of artificial intelligence technologies, and in particular to the field of autonomous driving technologies. A specific implementation solution of the vehicle control method includes: correcting a historical control sequence generated at a historical time instant, based on a deviation between an expected driving state of a target vehicle at a current time instant and an actual driving state of the target vehicle at the current time instant, to generate a first initial control sequence, where the expected driving state at the current time instant is determined according to the historical control sequence; and performing iterative processing on the first initial control sequence under a kinematic constraint and a driving cost constraint to obtain a target control sequence, and controlling driving of the target vehicle using the target control sequence.

200

| A historical control sequence generated at a historical time instant is corrected based on a deviation between an expected driving state of a target vehicle for a current time instant and an actual driving state of the target vehicle at the current time instant to generate a first initial control sequence | S210 |

↓

| Iterative processing is performed on the first initial control sequence under a kinematic constraint and a driving cost constraint to obtain a target control sequence so as to control driving of the target vehicle | S220 |

FIG. 2

EP 4 733 164 A2

**Description**

TECHNICAL FIELD

The present disclosure relates to a field of artificial intelligence technologies, in particular to a field of autonomous driving technologies, and more specifically to a vehicle control method, a vehicle control apparatus, an electronic device, and an autonomous vehicle.

BACKGROUND

With the widespread application of artificial intelligence technologies in the field of autonomous driving, when controlling a vehicle to perform driving operations such as lane keeping, lane changing, and obstacle avoidance according to changes in the driving environment, it is not only needed to meet the safety and comfort requirements of autonomous driving, but also needed to meet the real-time requirements of autonomous driving.

SUMMARY

The present disclosure provides a vehicle control method, a vehicle control apparatus, an electronic device, and an autonomous vehicle.

According to an aspect of the present disclosure, a vehicle control method is provided, including: correcting a historical control sequence generated at a historical time instant, based on a deviation between an expected driving state of a target vehicle at a current time instant and an actual driving state of the target vehicle at the current time instant, to generate a first initial control sequence, where the expected driving state at the current time instant is determined according to the historical control sequence; and performing iterative processing on the first initial control sequence under a kinematic constraint and a driving cost constraint to obtain a target control sequence, and controlling driving of the target vehicle using the target control sequence.

According to another aspect of the present disclosure, a vehicle control apparatus is provided, including a correction module and an optimization module. The correction module is configured to correct a historical control sequence generated at a historical time instant, based on a deviation between an expected driving state of a target vehicle at a current time instant and an actual driving state of the target vehicle at the current time instant, to generate a first initial control sequence, where the expected driving state at the current time instant is determined according to the historical control sequence. The optimization module is configured to perform iterative processing on the first initial control sequence under a kinematic constraint and a driving cost constraint to obtain a target control sequence, so as to control driving of the target vehicle based on the target control sequence.

According to another aspect of the present disclosure, an electronic device is provided, including: at least one processor; and a memory communicatively connected to the at least one processor, where the memory stores instructions executable by the at least one processor, and the instructions, when executed by the at least one processor, are configured to cause the at least one processor to perform the method described above.

According to another aspect of the present disclosure, an autonomous vehicle is provided, including the electronic device described above.

According to another aspect of the present disclosure, a non-transitory computer-readable storage medium having computer instructions therein is provided, where the computer instructions are configured to cause a computer to perform the method described above.

According to another aspect of the present disclosure, a computer program product including a computer program is provided, where the computer program, when executed by a processor, is configured to perform the method described above.

It should be understood that the content described in this section is not intended to identify key or essential features of embodiments of the present disclosure, nor is it intended to limit the scope of the present disclosure. Other features of the present disclosure will become easily understood through the following description.

BRIEF DESCRIPTION OF THE DRAWINGS

The accompanying drawings are provided to facilitate a better understanding of the present disclosure and do not constitute limitations to the present disclosure. In the accompanying drawings:

FIG. 1 schematically shows an exemplary system architecture to which a vehicle control method and a vehicle control apparatus according to embodiments of the present disclosure may be applied;

FIG. 2 schematically shows a flowchart of a vehicle control method according to embodiments of the present disclosure;

FIG. 3 schematically shows a diagram of correcting a historical control sequence according to embodiments of the present disclosure;

FIG. 4 schematically shows a diagram of controlling a vehicle to fully track a reference lane line according to embodiments of the present disclosure;

FIG. 5 schematically shows a diagram of controlling a vehicle to track a reference lane line according to an actual driving state of the vehicle according to embodiments of the present disclosure;

FIG. 6 schematically shows a diagram of a reference line tracking constraint for a vehicle according to embodiments of the present disclosure;

FIG. 7 schematically shows a diagram of a safety corridor constraint for a vehicle according to embodiments of the present disclosure;

FIG. 8 schematically shows a diagram of an obstacle constraint according to embodiments of the present disclosure;

FIG. 9 schematically shows an exemplary framework diagram of applying a vehicle control method according to embodiments of the present disclosure;

FIG. 10 schematically shows an exemplary framework diagram of applying a vehicle control method according to another embodiment of the present disclosure;

FIG. 11 schematically shows a block diagram of a vehicle control apparatus according to embodiments of the present disclosure; and

FIG. 12 schematically shows a block diagram of an electronic device suitable for implementing a vehicle control method according to embodiments of the present disclosure.

DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those ordinary skilled in the art should realize that various changes and modifications may be made to embodiments described herein without departing from the scope and spirit of the present disclosure. Likewise, for clarity and conciseness, descriptions of well-known functions and structures are omitted in the following description.

The iLQR (Iterative Linear Quadratic Regulator) algorithm may be used to improve accuracy of vehicle control by iteratively linearizing a kinematic model of a vehicle and quadraticizing a cost function. However, as a driving environment is complex and constantly changing during driving of a vehicle, when the iLQR algorithm is used to perform iterative processing based on a randomly generated initial control sequence, a convergence speed is slow, resulting in poor real-time performance in vehicle control.

In view of this, embodiments of the present disclosure are implemented to correct a historical control sequence generated at a historical time instant, based on a deviation between an actual driving state of a target vehicle and an expected driving state of the target vehicle, and perform iterative processing by using the corrected control sequence as an initial control sequence, thereby further increasing the convergence speed. This improves the efficiency of real-time vehicle control while ensuring control accuracy.

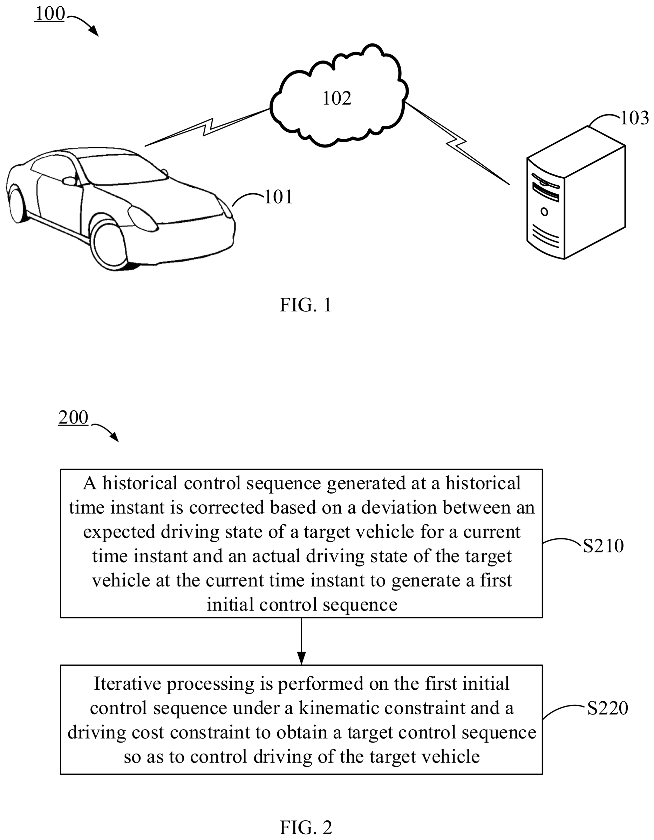

FIG. 1 schematically shows an exemplary system architecture to which a vehicle control method and a vehicle control apparatus according to embodiments of the present disclosure may be applied.

It should be noted that FIG. 1 is merely an example of the system architecture to which embodiments of the present disclosure may be applied, so as to help those skilled in the art understand technical contents of the present disclosure. However, it does not mean that embodiments of the present disclosure may not be applied to other devices, systems, environments, or scenarios. For example, in another embodiment, the exemplary system architecture to which the vehicle control method and apparatus may be applied may include a terminal device, but the terminal device may implement the vehicle control method and apparatus provided in embodiments of the present disclosure without interacting with a server.

As shown in FIG. 1, a system architecture 100 according to such embodiments may include an autonomous vehicle 101, a network 102, and a server 103. The network 102 serves as a medium for providing a communication link between the autonomous vehicle 101 and the server 103. A connection type of the network 102 may be a wireless communication link.

The autonomous vehicle 101 may be configured with various sensors for collecting driving environment information. The collected driving environment information may then be transmitted to the server 103 via the network 102. The server 103 may generate a target control sequence by performing the vehicle control method provided in embodiments of the present disclosure, and transmit the target control sequence to the autonomous vehicle 101 to control driving of the autonomous vehicle.

The vehicle control method provided in embodiments of the present disclosure may also be performed by an electronic device configured in the autonomous vehicle 101. Accordingly, the vehicle control apparatus provided in embodiments of the present disclosure may also be disposed in the autonomous vehicle 101.

It should be understood that the numbers of autonomous vehicles, networks, and servers shown in FIG. 1 are merely illustrative. According to implementation requirements, any number of autonomous vehicles, networks, and servers may be provided.

In the technical solutions of the present disclosure, the collection, storage, use, processing, transmission, provision, disclosure, and application of user personal information involved comply with relevant laws and regulations, necessary confidentiality measures have been taken, and no violation of public order and good morals occurs.

In the technical solutions of the present disclosure, user authorization or consent is obtained before acquiring or collecting any user personal information.

FIG. 2 schematically shows a flowchart of a vehicle control method according to embodiments of the present disclosure.

As shown in FIG. 2, a method 200 includes operation S210 to operation S220.

In operation S210, a historical control sequence generated at a historical time instant is corrected based on a deviation between an expected driving state of a target vehicle at a current time instant and an actual driving state of the target vehicle at the current time instant to generate a first initial control sequence.

In operation S220, iterative processing is performed on the first initial control sequence under a kinematic constraint and a driving cost constraint to obtain a target control sequence, so as to control driving of the target vehicle based on the target control sequence.

According to embodiments of the present disclosure, the expected driving state at the current time instant is determined according to the historical control sequence. A control sequence represents a time-series sequence of control information. The historical control sequence may be an output result obtained by performing iterative processing on an initial control sequence at a previous time instant using the iLQR algorithm at a previous sampling time instant.

For example, the historical control sequence may include control information for T time instants. The control information may include information such as a steering wheel rotation angle and a steering wheel rotation speed at each time instant. A time interval between the time instants may be pre-configured or may be dynamically adjusted according to practical requirements.

For example, a planning horizon may be T = 6 s, and a number of planning steps may be N = 30, in which case the time interval between time instants may be $\Delta t = T / N = 0.5$ s.

According to embodiments of the present disclosure, the driving state may include a driving position, a heading direction, a driving speed, a steering wheel rotation angle, and the like of the target vehicle.

For example, the historical control sequence may be $[u_0, u_1, u_2, ..., u_{29}]$. According to the historical control sequence, the expected driving states of the vehicle at the time instants may be determined as $[x_0, x_1, x_2, ..., x_{29}]$. As the time interval between time instants is $\Delta t = 0.5$ s, the expected driving state of the vehicle may be $x_1$. However, at $t_0 + 0.25$ s, the historical control sequence may be corrected according to a deviation between a current driving state $x^*$ and the expected driving state of the vehicle, so as to reduce a delay or deviation in the obtained control sequence caused by the misalignment of timestamps at the initial time instant if the historical control sequence is directly used as the initial control sequence for the next time instant.

In some embodiments, the kinematic constraint may be used to constrain relationships between the driving position, driving speed, heading angle, and curvature of the vehicle in the driving state.

In some embodiments, the driving cost constraint may be used to constrain a driving trajectory of the vehicle from aspects such as driving safety, driving comfort, rationality of the driving trajectory, and a matching degree between a driving operation and the driving trajectory.

For example, the first initial control sequence may serve as an initial solution for the iLQR algorithm to initiate an iterative processing operation. Under dual constraints of the kinematic constraint and the driving cost constraint, iterations are repeatedly performed until an output result converges or a maximum number of iterations is reached, thereby obtaining a target control sequence to control driving of the vehicle at the next time instant.

According to embodiments of the present disclosure, the historical control sequence generated at the historical time instant is corrected based on the deviation between the actual driving state and the expected driving state of the target vehicle, and the corrected control sequence is used as the initial control sequence for iterative processing, thereby further increasing the convergence speed. This improves the efficiency of real-time vehicle control while ensuring control accuracy.

In some embodiments, a control sequence generated at a previous time instant may be corrected based on the actual driving state at the current time instant, so as to align the timestamps of the initial control sequence for the current time instant.

For example, the historical control sequence may include control information for T time instants, where T is an integer greater than 1. Correcting the historical control sequence generated at the historical time instant based on the deviation between the expected driving state and the actual driving state of the target vehicle at the current time instant to generate the first initial control sequence may include: determining the expected driving state for the t-th time instant according to the control information for the (t-1)-th time instant, where t = 2, 3, ..., T-1; and performing an interpolation between the control information for adjacent time instants in the historical control sequence based on a deviation between the expected driving state at the t-th time instant and the actual driving state at the t-th time instant to generate the first initial control sequence

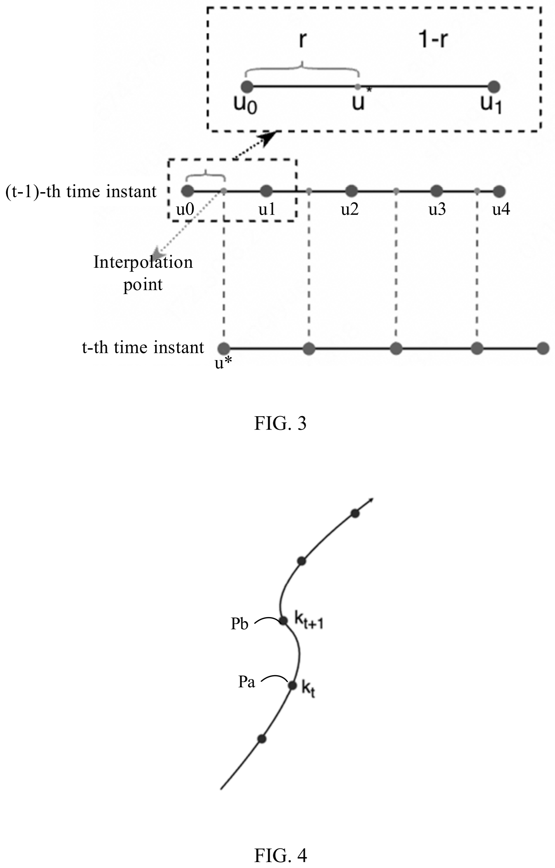

FIG. 3 schematically shows a diagram of correcting a historical control sequence according to embodiments of the present disclosure.

As shown in FIG. 3, the (t-1)-th time instant may be a sampling time instant immediately preceding the current sampling time instant (the t-th time instant) in a sampling cycle.

For a historical control sequence $[u_0, u_1, u_2, u_3, u_4]$ output at the (t-1)-th time instant, the expected driving state at the t-th time instant is determined by the historical control sequence. In practical application scenarios, a time interval between adjacent time instants in the historical control sequence is greater than a time interval between the (t-1)-th time instant and the t-th time instant.

For example, the time interval between the time instants in the historical control sequence may be 0.5 s, while the time interval between the (t-1)-th time instant and the t-th time instant may be 0.25 s. Therefore, if the historical control sequence output at the (t-1)-th time instant is directly used as the first initial control sequence for iterative processing to generate a target control sequence for the t-th time instant, a significant delay or deviation will evidently occur.

For example, the historical control sequence $[u_0, u_1, u_2, u_3, u_4]$ output at the (t-1)-th time instant may represent control information $u_0$ at 0.5 s, control information $u_1$ at 1.0 s, control information $u_3$ at 1.5 s, and control information $u_4$ at 2.0 s. According to the control information $u_0$ for 0.5 s (the (t-1)-th time instant), an expected driving state $x_0$ for 0.5 s~1.0 s may be determined. According to the control information $u_1$ for 1.0 s, an expected driving state $x_1$ for 1.0 s~1.5 s may be determined. In the actual driving process of the vehicle, the vehicle may begin to iteratively generate the target control sequence for 0.75 s (the t-th time instant) when driving to 0.75 s.

As the historical control sequence lacks the control information for 0.75 s, but only includes the control information for 0.5 s and 1.0 s adjacent to 0.75 s, if the historical control sequence is directly used as the first initial control sequence for the current iteration, a significant delay or deviation will evidently occur. Therefore, the historical control sequence may be corrected based on a deviation between the actual driving state x* of the vehicle at 0.75 s and the expected driving state $x_0$ of the vehicle at 0.75 s. For example, the difference between the actual driving state at 0.75 s and the expected driving state at 0.75 s may be used as an interpolation coefficient. Then, based on the interpolation coefficient, a value to be inserted between the control information for 0.5 s and the control information for 1.0 s is obtained to correct the historical control sequence, thereby reducing the delay or deviation.

In practical application scenarios, the historical control sequence output at the (t-1)-th time instant may be a control sequence used to control driving of the vehicle at 0.5 s, 1 s, 1.5 s, .... The time instant at which the control sequence is generated by the vehicle may lie within the time period corresponding to the historical control sequence. For example, at 1 s, a control sequence for controlling the driving at 1.5 s, 2 s, 2.5 s, ... may be regenerated. Accordingly, when performing an interpolation, the interpolation may be performed on the historical control sequence based on a deviation between the actual driving state and the expected driving state at a past time instant, and the past time instant must be earlier than the last time instant in the historical control sequence.

Therefore, an interpolation may be performed on the historical control sequence based on the actual driving state of the vehicle at the t-th time instant, and the control sequence obtained by performing the interpolation may serve as the first initial control sequence, so as to reduce a delay or deviation in the obtained control sequence caused by the misalignment of timestamps at the initial time instant if the historical control sequence is directly used as the initial control sequence for the next time instant.

In some embodiments, by performing an interpolation between control information for adjacent time instants, a delay or deviation between the control sequence output at the previous time instant and the initial control sequence output at the current time instant may be reduced.

For example, performing an interpolation between the control information for adjacent time instants in the historical control sequence based on the deviation between the expected driving state at the t-th time instant and the actual driving state at the t-th time instant to generate the first initial control sequence may include: determining an expected driving state for the (t+1)-th time instant according to the control information for the t-th time instant; obtaining an interpolation coefficient according to a ratio of the deviation to a difference in expected driving states; and performing an interpolation between control information for adjacent time instants in the historical control sequence based on the interpolation coefficient and the control information for each time instant to obtain the first initial control sequence.

According to embodiments of the present disclosure, the difference in expected driving states indicates a difference between the expected driving state for the t-th time instant and the expected driving state for the (t+1)-th time instant.

For example, in the historical control sequence $[u_0, u_1, u_2, u_3, u_4]$ output at the (t-1)-th time instant, the expected driving states for the time instants in a future time period may be determined as $[x_0, x_1, x_2, x_3, x_4]$. An interpolation may be performed between control information $u_0$ and control information $u_1$ according to Equation (1).

$$u^* = u_0 * r + u_1(1 - r)$$
$$r = |x^* - x_0|/|x_1 - x_0| \tag{1}$$

where r represents an interpolation coefficient, $x^*$ represents an actual driving state at the t-th time instant, $x_0$ represents an expected driving state for the t-th time instant, and $x_1$ represents an expected driving state for the (t+1)-th time instant; $u_0$ represents a control information for the t-th time instant, and $u_1$ represents a control information for the (t+1)-th time instant; $u^*$ represents an interpolation point, that is, the corrected control information for the t-th time instant in the first initial control sequence.

Similarly, for $[u_1, u_2, u_3, u_4]$ in the historical control sequence, an interpolation may be performed between control information $u_1$ and control information $u_2$, between control information $u_2$ and control information $u_3$, and between control information $u_3$ and control information $u_4$ based on the interpolation coefficient r calculated according to Equation (1), thereby obtaining the first initial control sequence.

According to embodiments of the present disclosure, an interpolation is performed between the control information for adjacent time instants in the historical control sequence based on the deviation between the actual driving state at the current time instant and the expected driving state determined from the historical control sequence, thereby reducing an error between the initial control sequence for the current time instant and the actual driving state of the vehicle, and further improving the convergence speed of iteratively generating the target control sequence.

In some embodiments, in addition to correcting the historical control sequence, an initial control sequence for an iterative operation may also be generated based on a reference lane line in the vehicle driving environment. For example, according to a reference lane line associated with a driving intention of the target vehicle, a second initial control sequence configured to control the target vehicle to drive along the reference lane line may be generated; and an initial control sequence for the iterative operation may be determined from the first initial control sequence and the second initial control sequence based on an objective function.

According to embodiments of the present disclosure, the reference lane line associated with the driving intention of the target vehicle may represent a reference lane line associated with the current driving environment of the target vehicle.

For example, when the target vehicle is driving in a straight line region, the reference lane line may be a lane centerline of a lane region where the vehicle is located.

For example, in a driving scenario where the target vehicle is changing lanes or turning, the reference lane line may be a centerline of an opposite-direction lane opposite to a driving direction of the vehicle.

The second initial control sequence may be a control sequence configured to cause the vehicle to fully track the reference lane line, or may be a control sequence configured to control the vehicle to track the reference lane line based on the actual driving state of the vehicle.

In some embodiments, the target control sequence for the iterative operation may be determined from the first initial control sequence and the second initial control sequence based on the objective function.

According to embodiments of the present disclosure, the objective function may be constructed by comprehensively considering aspects such as trajectory tracking accuracy, driving safety, and driving comfort, based on requirements of practical application scenarios.

For example, the objective function may include a reference line tracking cost function, a target state cost function, a driving comfort cost function, and a safety cost function. The specific form of the objective function may be set based on practical application requirements, as long as the trajectory tracking accuracy, the driving safety, and the driving comfort may be constrained.

In some embodiments, determining the initial control sequence for the iterative operation from the first initial control sequence and the second initial control sequence based on the objective function may include: processing the first initial control sequence based on the objective function to generate a first cost value; processing the second initial control sequence based on the objective function to generate a second cost value; in response to determining that the first cost value is less than the second cost value, determining the first initial control sequence as the initial control sequence; and in response to determining that the first cost value is greater than or equal to the second cost value, determining the second initial control sequence as the initial control sequence.

For example, a function value of the first initial control sequence and a function value of the second initial control sequence may be calculated by using the objective function, and the initial control sequence with the smaller function value may be used for the iterative operation.

According to embodiments of the present disclosure, the strategy of tracking the reference lane line is combined with the strategy of correcting the historical control sequence, and the driving costs of initial control sequences obtained from different strategies are calculated using the objective function. This further increases the convergence speed of the iterative processing for the initial control sequence and improves control efficiency.

For scenarios where the lane line has high clarity and the driving environment is relatively simple, for example, in a straight line region of a highway, a strategy in which the vehicle is set to fully track the reference lane line may be applied.

In some embodiments, generating the second initial control sequence configured to control the target vehicle to drive along the reference lane line according to the reference lane line associated with the driving intention of the target vehicle may include: extracting a plurality of reference positions for a plurality of reference time instants from the reference lane line; and generating the second initial control sequence according to a curvature change state of each reference position on the reference lane line.

FIG. 4 schematically shows a diagram of controlling a vehicle to fully track a reference lane line according to embodiments of the present disclosure.

As shown in FIG. 4, the reference lane line in the diagram includes five reference positions, and an interval between the reference positions may be preconfigured.

In such embodiments, it is set that the vehicle may fully track the reference lane line, which means that the vehicle drives exactly according to the five reference positions indicated in the diagram. For example, the vehicle drives to reference position Pa at the t-th time instant, and drives to reference position Pb at the (t+1)-th time instant. Accordingly, the second initial control sequence may be generated based on a curvature change of each reference position, as shown in Equation (2).

$$d\kappa_t = (\kappa_{t+1} - \kappa_t)/dt$$
$$U = [d\kappa_0, d\kappa_1, ..., d\kappa_{t-1}] \tag{2}$$

where $\kappa_{t+1}$ represents a curvature of the reference position for the (t+1)-th reference time instant, $\kappa_t$ represents a curvature of the reference position for the t-th reference time instant, U represents a second initial control sequence, and $d\kappa_t$ represents a curvature change rate for the t-th time instant.

According to embodiments of the present disclosure, generating the second initial control sequence based on the curvature change of the lane line achieves a higher degree of matching with the driving scenario compared with related examples where the control sequence is randomly configured. Therefore, the convergence speed in iterative processing may be increased.

For scenarios where the lane line has low clarity and the driving environment is relatively complex, for example, turning or lane changing scenarios, a strategy in which the vehicle is set to be controlled to track the reference lane line may be applied.

In some embodiments, generating the second initial control sequence configured to control the target vehicle to drive along the reference lane line according to the reference lane line associated with the driving intention of the target vehicle may include: generating a driving state for each time instant based on the driving state of the target vehicle at the current time instant; determining a target reference position for each time instant from the reference lane line based on the driving state for each time instant; and processing the driving state for each time instant and the target reference position for each time instant to generate the second initial control sequence.

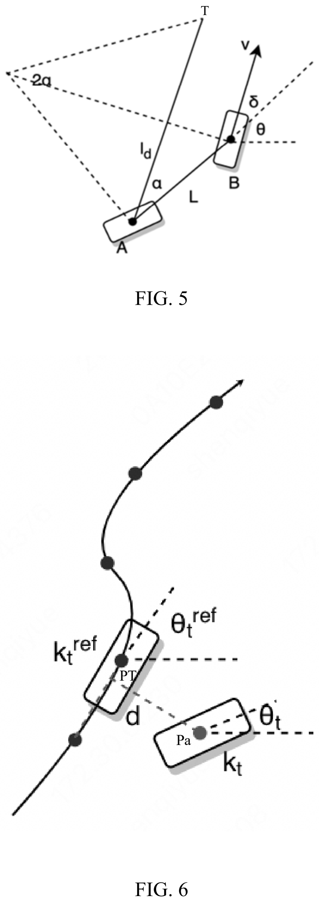

The process of generating the control information for the t-th time instant will be described in detail below with reference to FIG. 5.

FIG. 5 schematically shows a diagram of controlling a vehicle to track a reference lane line according to the actual driving state of the vehicle according to embodiments of the present disclosure.

As shown in FIG. 5, in this diagram, a front wheel of the vehicle is located at point B, and a rear wheel of the vehicle is located at point A. A target reference position of the vehicle is point T. A distance between point A and point T is a look-ahead distance $l_d$, and a distance between point A and point B represents a wheelbase L of the vehicle. α represents a heading angle of the target reference position T relative to a current position of the vehicle. δ represents a steering angle of the front wheel of the vehicle. θ represents a heading angle of the front wheel of the vehicle.

In some embodiments, processing the driving state for each time instant and the target reference position for each time instant to generate the second initial control sequence may include: determining an angle of the target reference position for the t-th time instant relative to a driving position for the t-th time instant as a heading angle of the target vehicle for the t-th time instant, where t = 2, 3, ..., T-1, and T is an integer greater than 1; performing a geometric transformation on the heading angle for the t-th time instant based on a geometric relationship between a wheel steering angle and a vehicle heading angle to generate a wheel steering angle for the t-th time instant; generating a curvature for the t-th time instant based on the wheel steering angle for the t-th time instant and a predetermined wheelbase; and generating the second initial control sequence based on a curvature change state between the t-th time instant and the (t-1)-th time instant.

In some embodiments, the control information for the t-th time instant may be calculated according to Equation (3).

$$
\begin{aligned}
\alpha_t &= arctan(y_t - y_{t-1}, x_t - x_{t-1}) \\
\delta_t &= arctan(2 * L * sin(\alpha_t), l_d) \\
\kappa_t &= 1/L/tan(\delta_t) \\
d\kappa_t &= (\kappa_t - \kappa_{t-1})/l_d
\end{aligned}
\tag{3}
$$

where $\alpha_t$ represents a heading angle of the target reference position T for the t-th time instant relative to the current position of the vehicle, $\delta_t$ represents a steering angle of the front wheel of the vehicle for the t-th time instant, L represents a wheelbase, $l_d$ represents a look-ahead distance for the t-th time instant, $\kappa_t$ represents a curvature of the driving position for the t-th time instant, and $\kappa_{t-1}$ represents a curvature of the driving position at the (t-1)-th time instant.

In some embodiments, the target reference position for the (t+1)-th time instant may be obtained through recursive calculation along the reference lane line based on a driving velocity for the t-th time instant.

According to embodiments of the present disclosure, because the driving environment is complex, generating the second initial control sequence by recursively tracking the reference lane line based on the actual driving state of the vehicle may better match the actual driving state of the vehicle at the next time instant, thereby further increasing the convergence speed during iterative processing.

When the iLQR algorithm is used to solve a trajectory planning problem of the vehicle, the trajectory planning problem may be expressed as shown in Equation (4).

$$
\begin{aligned}
\min_{\substack{u_0,...,u_{N-1} \\ x_0,...,x_N}} J &= c_N(x_N) + \sum_{k=0}^{N-1} c_k^u(x_k) + c_k^u(u_k) \\
s.t. \quad x_{k+1} &= f(x_k, u_k), \quad k = 0, 1, ..., N-1 \\
x_0 &= x^{start} \\
f_k^x(x_k) &\le 0, \quad k = 0, 1, ..., N \\
f_k^u(u_k) &\le 0, \quad k = 0, 1, ..., N-1
\end{aligned}
\tag{4}
$$

where J represents an objective function, s.t. represents a constraint condition, $x_k$ represents an expected driving state for a k-th time instant, $x_{start}$ represents an expected driving state for an initial time instant, $C_N$ represents a driving cost for a target time instant, $\sum_{k=0}^{N-1} c_k^u(x_k) + c_k^u(u_k)$ represents a driving cost during the driving process, $f_k^x$ represents a kinematic constraint for the expected driving state, $f_k^u$ represents a kinematic constraint for the control information, and N represents the number of steps in a maximum planning horizon.

In embodiments of the present disclosure, the expected driving state may be represented as $X = [x, y, \theta, \kappa]^T$, the control information may be represented as $U = [d\kappa]^T$, and the kinematic constraint may be expressed as shown in Equation (5).

$$x_{(t+1)} = x_t + v_t cos(\theta_t)dt$$
$$y_{(t+1)} = y_t + v_t sin(\theta_t)dt$$
$$\theta_{(t+1)} = \theta_t + v_t \kappa_t dt$$
$$\kappa_{(t+1)} = \kappa_t + v_t \kappa_t dt$$

$$(5)$$

where $x_t y_t$ represents coordinates of an expected driving position of the vehicle, $v_t$ represents a driving velocity, $\theta_t$ represents a heading angle, $\kappa_t$ represents a curvature of the driving position, and $d\kappa$ represents a curvature change rate.

In embodiments of the present disclosure, the expected driving state may include an expected position and an expected heading angle, and a reference driving state may include a reference position and a reference heading angle. The objective function may include a reference line tracking cost function, a target state cost function, a driving comfort cost function, and a safety cost function.

According to embodiments of the present disclosure, the reference line tracking cost function is used to constrain a position difference between the expected position and the reference position at each time instant, and an angle difference between the expected heading angle and the reference heading angle at each time instant.

In embodiments of the present disclosure, the position difference between the expected position and the reference position at each time instant may be represented by a projection distance between the expected position and the reference position at each time instant.

FIG. 6 schematically shows a diagram of a reference line tracking constraint for a vehicle according to embodiments of the present disclosure.

As shown in FIG. 6, Pa represents a current actual position of the vehicle, $P_T$ represents a reference position on the reference lane line corresponding to the current time instant, $\theta t$ represents a heading angle of the front wheel of the vehicle at the current time instant, $\theta_t^{ref}$ represents a reference heading angle of the front wheel when the vehicle is located at the reference position on the reference lane line corresponding to the current time instant, and d represents a projection distance from Pa to $P_T$ along a tangent of the reference lane line.

In embodiments of the present disclosure, the reference line tracking cost function may be expressed as shown in Equation (6).

$$c_{ref} = \sum_{i=0}^{N} 0.5 * w_{ref}(d_i^2 + \Delta\theta_i^2)$$

$$(6)$$

where $c_{ref}$ represents a reference line tracking cost function, $d_i$ represents a projection distance between an expected position for an i-th time instant and a reference position for the i-th time instant, $\Delta\theta_i^2$ represents an angle difference between an expected heading angle for the i-th time instant and a reference heading angle for the i-th time instant, and $w_{ref}$ represents a weight of the reference line tracking cost.

According to embodiments of the present disclosure, the target state cost function is used to constrain an error between an expected driving state at a target time instant and a target driving state.

In embodiments of the present disclosure, the target state cost function may be expressed as shown in Equation (7).

$$c_{goal} = (x_{goal} - x_N)^2 + (y_{goal} - y_N)^2 + (\theta_{goal} - \theta_N)^2 + (\kappa_{goal} - \kappa_N)^2 + (d\kappa_{goal} - d\kappa_N)^2$$

$$(7)$$

where $c_{goal}$ represents a target state cost function, $x_{goal}$ represents a horizontal coordinate of a target position, $y_{goal}$ represents a vertical coordinate of the target position, $\theta_{goal}$ represents a target heading angle, $\kappa_N$ represents a curvature of the target position, $d\kappa_{goal}$ represents a curvature change rate of the target position relative to a driving position at a previous time instant, $x_N$ represents a horizontal coordinate of an expected position for the target time instant, $y_N$ represents a vertical coordinate of the expected position for the target time instant, $\theta_N$ represents an expected heading angle for the target time instant, $\kappa_N$ represents a curvature of the expected position for the target time instant, and $d\kappa_N$ represents a curvature change rate of the expected position for the target time instant relative to the expected position at the previous time instant.

According to embodiments of the present disclosure, the driving comfort cost function is used to constrain a curvature change state of the expected driving state for each time instant.

In embodiments of the present disclosure, the driving comfort cost function may be expressed as shown in Equation (8).

$$c_{com} = \sum_{i=0}^{N}\left[0.5 * w_{com_k} * (k_i)^2 + 0.5 * w_{com_{dk}} * dk_i^2\right]$$

$$(8)$$

where $c_{com}$ represents a driving comfort cost function, $\kappa_i$ represents a curvature of an expected position for the i-th time instant, $d\kappa_i$ represents a curvature change rate of the expected position for the i-th time instant relative to the expected position for the (i-1)-th time instant, $\omega_{com_k}$ represents a weight of the curvature, and $\omega_{com_{dk}}$ represents a weight of the curvature change rate.

According to embodiments of the present disclosure, the safety cost function is used to constrain a safe driving range of the expected driving state for each time instant.

In some embodiments, the safety cost function may include a safety corridor constraint, a kinematic constraint for the control sequence, and an obstacle constraint.

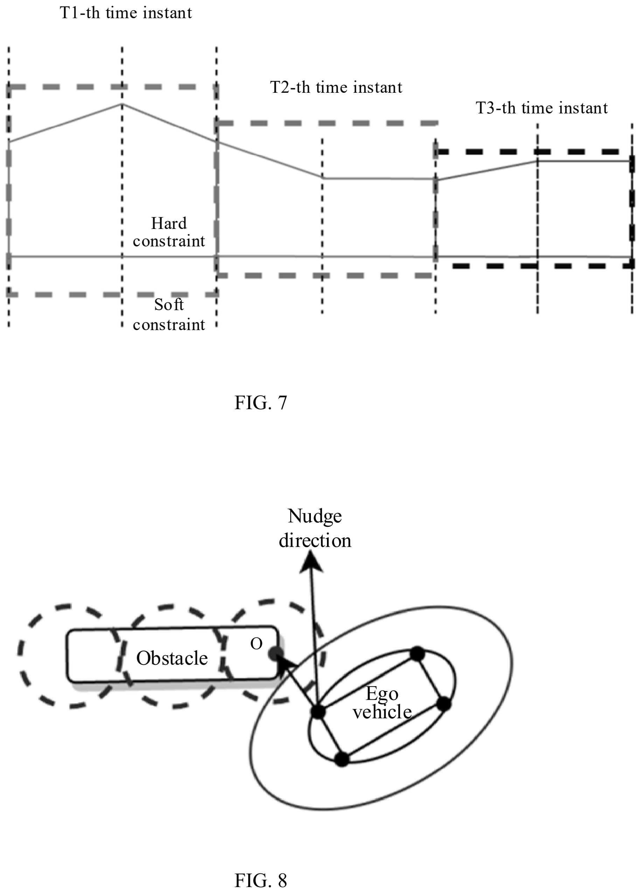

FIG. 7 schematically shows a diagram of a safety corridor constraint of the vehicle according to embodiments of the present disclosure.

As shown in FIG. 7, in such embodiments, a safety corridor may be constructed using polygons. For example, a hard constraint of the safety corridor (the solid-line region in the figure) may be constructed using a hexagon, and a soft constraint of the safety corridor (the dashed-line region in the figure) may be constructed using a quadrilateral.

For example, s (s > 1) sampling reference points may be obtained from the reference line at a predetermined interval. For each reference point, the maximum reachable distance points on left and right sides of the reference point in an *l*-direction may be determined. For example, at a distance equal to a diameter of an envelope circle away from an obstacle, every n points may be connected to form a polygon. This process continues until the entire trajectory is traversed, and all the polygons constructed from the sampling form a safety corridor. At this time, it is required that envelope circles centered at front and rear axle centers of the vehicle are located within the polygon. This requirement may be converted into the constraint shown in Equation (9), and for cases that do not satisfy the constraint, a penalty proportional to a fourth power of a distance from the driving position to the straight line is imposed. This further improves the flexibility and granularity of safety corridor construction.

$$c_{cor} = 0.5 * w_{cor}(g(E_i))^4$$

$$(9)$$

where $c_{cor}$ represents a safety corridor constraint; when the driving position lies within the polygon representing the hard constraint, $g(E_i) = 0$, and when the driving position lies outside the polygon representing the hard constraint but inside the polygon representing the soft constraint, $g(E_i)$ is equal to a distance from the driving position to an edge of the polygon representing the hard constraint; $\omega_{cor}$ represents a weight of the safety corridor constraint.

In some embodiments, the kinematic constraint for the control sequence may represent constraints on variation ranges of the driving position, heading angle, curvature, and curvature change rate of the vehicle. The specific variation ranges may be configured according to practical requirements and are not specifically limited in embodiments of the present disclosure.

In some embodiments, the obstacle constraint may be constructed using an envelope ellipse. For example, when the driving position of the vehicle lies within the ellipse, it may be determined that there exists a collision risk between the vehicle and an obstacle.

FIG. 8 schematically shows a diagram of an obstacle constraint according to embodiments of the present disclosure.

As shown in FIG. 8, a position of an obstacle may be represented by center points of a plurality of circles. Point O represents a center point closest to the vehicle in a nudge direction, which may be used to determine whether a collision risk exists between the current driving position of the vehicle and the obstacle.

For example, the obstacle constraint may be constructed according to Equation (10).

$$c_{obs} = w_{obs} * g(X)^4$$

$$g(X) = 1 - v_k^T P v_k \tag{10}$$

where $c_{obs}$ represents an obstacle constraint, $v_k$ represents a vector from a center point of the ellipse to the vehicle driving position, P represents a matrix with reciprocals of squared lengths of a major axis and a minor axis of the ellipse as diagonal elements, and $\omega_{obs}$ represents a weight of the obstacle constraint.

The objective function may be expressed as shown in Equation (11).

$$J = c_{ref} + c_{goal} + c_{comfort} + c_{corridor} + c_{state-control} + c_{obs} \tag{11}$$

where $c_{ref}$ represents a reference line tracking cost function, $c_{goal}$ represents a target state cost function, $c_{comfort}$ represents a driving comfort cost function, $c_{corridor}$ represents a safety corridor constraint, $C_{state-control}$ represents a kinematic constraint for the control sequence, and $C_{obs}$ represents an obstacle constraint.

According to embodiments of the present disclosure, the objective function is constructed by comprehensively considering trajectory tracking accuracy, driving comfort, and driving safety, thereby further improving the precision of vehicle control.

In order to reduce a difference between a target control sequence output at the current time instant and a historical control sequence output at a previous time instant, in some embodiments, the objective function may further include a historical trajectory tracking cost function, which is used to constrain a position difference between an expected position and a historical expected position for each time instant, and an angle difference between an expected heading angle and a historical expected heading angle for each time instant.

For example, the historical trajectory tracking cost may be calculated according to Equation (12).

$$c_{pre} = \sum_{i=0}^{N} 0.5 * w_{pre}(s_i^2 + \Delta\phi_i^2) \tag{12}$$

where $c_{pre}$ represents a historical trajectory tracking cost function, $s_i$ represents a projection distance between an expected position for the i-th time instant and a historical expected position for the i-th time instant, $\Delta\varphi_i$ represents an angle difference between an expected heading angle for the i-th time instant and a historical expected heading angle for the i-th time instant, and $\omega_{pre}$ represents a weight of historical trajectory tracking.

In some embodiments, in order to further improve control efficiency, the number of historical control information extracted from the historical control sequence may be determined based on the actual driving state of the vehicle.

When the actual driving state of the vehicle involves a large curvature change, the small number of historical control information may be extracted. For example, if the historical control sequence includes historical control information for ten time instants from the 10th second to the 20th second, only the historical control information for three time instants from the 17th second to the 20th second may be extracted to participate in the calculation of the historical trajectory tracking cost.

When the actual driving state of the vehicle involves a small curvature change, the large number of historical control information may be extracted. For example, the historical control information for eight time instants from the 12th second to the 20th second may be extracted to participate in the calculation of the historical trajectory tracking cost.

According to embodiments of the present disclosure, by introducing the historical trajectory tracking cost into the objective function, a difference between the target control sequence output at the current time instant and the historical control sequence output at the previous time instant may be reduced, thereby reducing occurrences of abnormal driving behaviors, such as rapid rotation of steering wheel or S-shaped driving trajectories on the road.

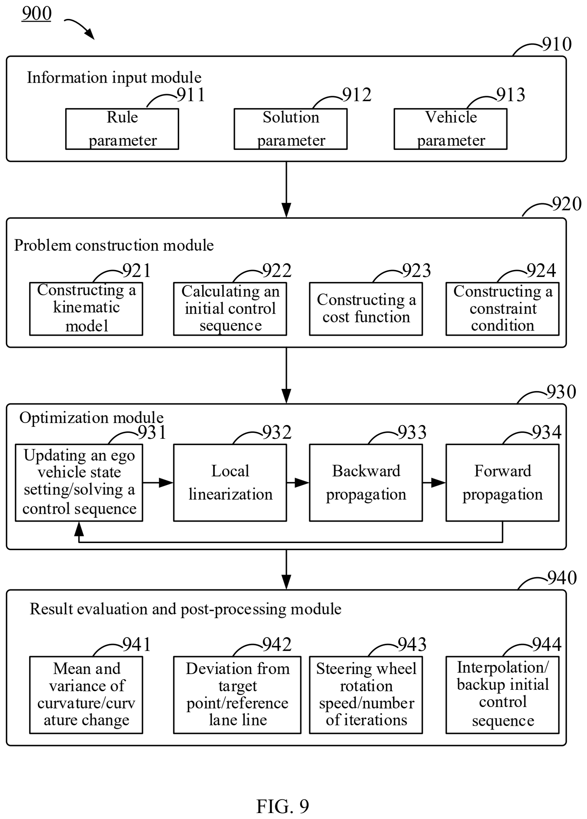

FIG. 9 schematically shows an exemplary framework diagram of applying a vehicle control method according to embodiments of the present disclosure.

As shown in FIG. 9, an exemplary framework 900 may include an information input module 910, a problem construction module 920, an optimization module 930, and a result evaluation and post-processing module 940.

The information input module 910 is used to input a rule parameter 911, a solution parameter 912, and a vehicle parameter 913. The rule parameter 911 includes, but is not limited to, a threshold value in the kinematic constraint, a planning horizon parameter, a planning step parameter, and the like. The solution parameter 912 includes, but is not limited to, a control sequence, a driving state sequence, and the like. The vehicle parameter 913 includes, but is not limited to, a wheelbase.

The problem construction module 920 may be used to perform operations such as constructing a kinematic model 921, calculating an initial control sequence 922, constructing a cost function 923, and constructing a constraint condition 924.

The optimization module 930 may be used to update an ego vehicle state setting/solve a control sequence 931, perform local linearization 932, backward propagation 933, and forward propagation 934 using the iLQR algorithm to iteratively process the initial control sequence until convergence, thereby obtaining a target control sequence. The process of iteratively processing the initial control sequence using the iLQR algorithm is a mature solution, and therefore will not be described in detail in embodiments of the present disclosure.

The result evaluation and post-processing module 940 may evaluate a control result based on factors such as mean and variance of curvature/curvature change 941, a deviation from target point/reference lane line 942, and a steering wheel rotation speed/number of iterations 943. It may further optimize the target control sequence by performing an interpolation or activating a backup initial control sequence to participate in a new round of algorithm iteration.

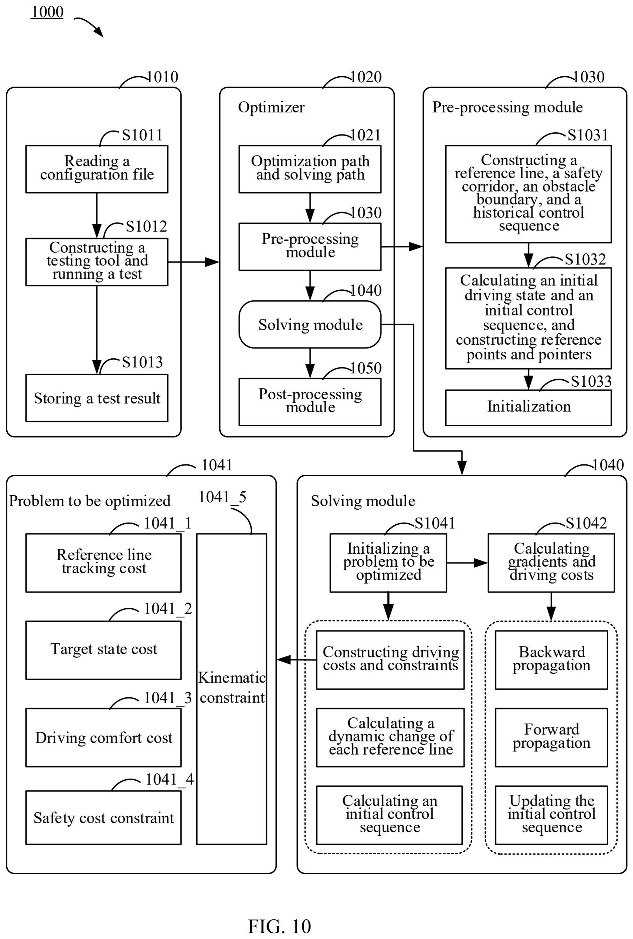

FIG. 10 schematically shows an exemplary framework diagram of applying a vehicle control method according to another embodiment of the present disclosure.

As shown in FIG. 10, an exemplary framework 1000 may include a test module 1010 and an optimizer 1020.

The test module 1010 may be used to perform operation S1011 of reading a configuration file, operation S1012 of constructing a testing tool and running a test, and operation S1013 of storing a test result.

The optimizer 1020 is a core module for performing the above-mentioned operation S1012. The optimizer may include a pre-processing module 1030, a solving module 1040, and a post-processing module 1050. The optimizer 1020 is configured with a pre-constructed optimization path and solving path 1021, so that the pre-processing module 1030, the solving module 1040, and the post-processing module 1050 may perform operations of generating a target control sequence according to the optimization path and solving path 1021.

The pre-processing module 1030 is used to perform operation S1031 of constructing a reference line, a safety corridor, an obstacle boundary, and a historical control sequence; perform operation S1032 of calculating an initial driving state and an initial control sequence as well as constructing reference points and pointers; and perform operation S1033 of performing initialization to start the iLQR algorithm.

The solving module 1040 is used to perform operation S1041 of initializing a problem to be optimized, and perform operation S1042 of calculating gradients and driving costs to obtain a target control sequence. Operation S1041 may include operations such as constructing driving costs and constraints, calculating a dynamic change of each reference line, and calculating an initial control sequence. Operation S1042 may include executing the iLQR algorithm to update the initial control sequence through backward propagation and forward propagation until convergence.

The problem to be optimized 1041 may include a reference line tracking cost 1041_1, a target state cost 1041_2, a driving comfort cost 1041_3, a safety cost constraint 1041_4, and a kinematic constraint 1041_5, corresponding to the objective function in the vehicle control method described above.

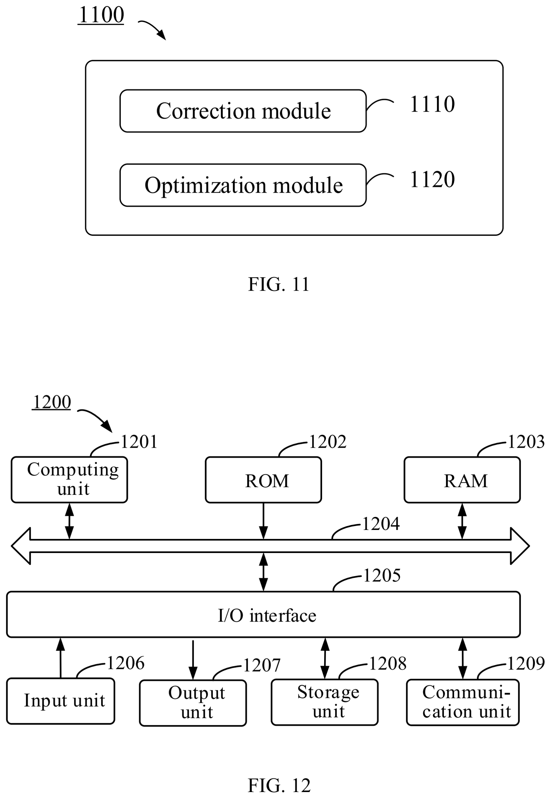

FIG. 11 schematically shows a block diagram of a vehicle control apparatus according to embodiments of the present disclosure.

As shown in FIG. 11, a vehicle control apparatus 1100 may include a correction module 1110 and an optimization module 1120.

The correction module 1110 is used to correct a historical control sequence generated at a historical time instant, based on a deviation between an expected driving state of a target vehicle at a current time instant and an actual driving state of the target vehicle at the current time instant, to generate a first initial control sequence, where the expected driving state at the current time instant is determined according to the historical control sequence.

The optimization module 1120 is used to perform iterative processing on the first initial control sequence under a kinematic constraint and a driving cost constraint to obtain a target control sequence, so as to control driving of the target vehicle based on the target control sequence.

According to embodiments of the present disclosure, the correction module may include a first determination submodule and an interpolation submodule.

The first determination submodule is used to determine an expected driving state for a t-th time instant according to a control information for a (t-1)-th time instant, where t = 2, 3, ..., T-1.

The interpolation submodule is used to perform an interpolation between control information for adjacent time instants in the historical control sequence based on a deviation between the expected driving state for the t-th time instant and the actual driving state at the t-th time instant to generate the first initial control sequence.

According to embodiments of the present disclosure, the interpolation submodule may include a first determination unit, a first obtaining unit, and a first interpolation unit.

The first determination unit is used to determine an expected driving state for a (t+1)-th time instant according to the control information for the t-th time instant.

The first obtaining unit is used to obtain an interpolation coefficient according to a ratio of the deviation to a difference in expected driving states, where the difference in expected driving states indicates a difference between the expected driving state for the t-th time instant and the expected driving state for the (t+1)-th time instant.

The first interpolation unit is used to perform an interpolation between control information at adjacent time instants in the historical control sequence based on the interpolation coefficient and the control information for each time instant to obtain the first initial control sequence.

According to embodiments of the present disclosure, the apparatus may further include a generation module and a determination module.

The generation module is used to generate, according to a reference lane line associated with a driving intention of the target vehicle, a second initial control sequence for controlling the target vehicle to drive along the reference lane line.

The determination module is used to determine an initial control sequence for an iterative operation from the first initial control sequence and the second initial control sequence based on an objective function.

According to embodiments of the present disclosure, the generation module may include an extraction submodule and a first generation submodule.

The extraction submodule is used to extract a plurality of reference positions for a plurality of reference time instants from the reference lane line.

The first generation submodule is used to generate the second initial control sequence according to a curvature change state of each reference position on the reference lane line.

According to embodiments of the present disclosure, the generation module may include a second generation submodule, a second determination submodule, and a third generation submodule.

The second generation submodule is used to generate a driving state for each time instant based on a driving state of the target vehicle at the current time instant.

The second determination submodule is used to determine a target reference position for each time instant from the reference lane line based on the driving state for each time instant.

The third generation submodule is used to process the driving state for each time instant and the target reference position for each time instant to generate the second initial control sequence.

According to embodiments of the present disclosure, the driving state includes a driving position and a wheel steering angle of the target vehicle. The third generation submodule may include a second determination unit, a transformation unit, a first generation unit, and a second generation unit.

The second determination unit is used to determine an angle of a target reference position for the t-th time instant relative to a driving position for the t-th time instant as a heading angle of the target vehicle for the t-th time instant, where t = 2, 3, ..., T-1, and T is an integer greater than 1.

The transformation unit is used to perform a geometric transformation on the heading angle for the t-th time instant based on a geometric relationship between a wheel steering angle and a vehicle heading angle to generate a wheel steering angle for the t-th time instant.

The first generation unit is used to generate a curvature for the t-th time instant based on the wheel steering angle for the t-th time instant and a predetermined wheelbase.

The second generation unit is used to generate a third initial control sequence based on a curvature change state between the t-th time instant and the (t-1)-th time instant.

According to embodiments of the present disclosure, the determination module may include a first processing unit, a second processing unit, and a third determination unit.

The first processing unit is used to process the first initial control sequence based on the objective function to generate a first cost value.

The second processing unit is used to process the second initial control sequence based on the objective function to generate a second cost value.

The third determination unit is used to, in response to determining that the first cost value is less than the second cost value, determine the first initial control sequence as the initial control sequence; and in response to determining that the first cost value is greater than or equal to the second cost value, determine the second initial control sequence as the initial control sequence.

According to embodiments of the present disclosure, the expected driving state includes an expected position and an expected heading angle, and the reference driving state includes a reference position and a reference heading angle. The objective function includes a reference line tracking cost function, a target state cost function, a driving comfort cost function, and a safety cost function.

The reference line tracking cost function is used to constrain a position difference between the expected position and the reference position for each time instant, and an angle difference between the expected heading angle and the reference heading angle for each time instant.

The target state cost function is used to constrain an error between an expected driving state for a target time instant and a target driving state.

The driving comfort cost function is used to constrain a curvature change of the expected driving state for each time instant.

The safety cost function is used to constrain a safe driving range of the expected driving state for each time instant.

According to embodiments of the present disclosure, the objective function may further include a historical trajectory tracking cost function, which is used to constrain a position difference between the expected position and a historical expected position for each time instant, and an angle difference between the expected heading angle and a historical expected heading angle for each time instant.

According to embodiments of the present disclosure, the present disclosure further provides an electronic device, an autonomous vehicle, a readable storage medium, and a computer program product.

According to embodiments of the present disclosure, an electronic device is provided, including: at least one processor; and a memory communicatively connected to the at least one processor, where the memory stores instructions executable by the at least one processor, and the instructions, when executed by the at least one processor, are used to cause the at least one processor to perform the method described above.

According to embodiments of the present disclosure, an autonomous vehicle is provided, including the electronic device described above.

According to embodiments of the present disclosure, a non-transitory computer-readable storage medium having computer instructions therein is provided, where the computer instructions are used to cause a computer to perform the method described above.

According to embodiments of the present disclosure, a computer program product including a computer program is provided, where the computer program, when executed by a processor, is used to perform the method described above.

FIG. 12 shows a schematic block diagram of an exemplary electronic device 1200 that may be used to implement embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 12, the electronic device 1200 includes a computing unit 1201 which may perform various appropriate actions and processes according to a computer program stored in a read only memory (ROM) 1202 or a computer program loaded from a storage unit 1208 into a random access memory (RAM) 1203. In the RAM 1203, various programs and data necessary for an operation of the electronic device 1200 may also be stored. The computing unit 1201, the ROM 1202 and the RAM 1203 are connected to each other through a bus 1204. An input/output (I/O) interface 1205 is also connected to the bus 1204.

A plurality of components in the electronic device 1200 are connected to the input/output (I/O) interface 1205, including: an input unit 1206, such as a keyboard, or a mouse; an output unit 1207, such as displays or speakers of various types; a storage unit 1208, such as a disk, or an optical disc; and a communication unit 1209, such as a network card, a modem, or a wireless communication transceiver. The communication unit 1209 allows the electronic device 1200 to exchange information/data with other devices through a computer network such as Internet and/or various telecommunication networks.

The computing unit 1201 may be various general-purpose and/or dedicated processing assemblies having processing and computing capabilities. Some examples of the computing units 1201 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 1201 executes various methods and processes described above, such as the vehicle control method. For example, in some embodiments, the vehicle control method may be implemented as a computer software program which is tangibly embodied in a machine-readable medium, such as the storage unit 1208. In some embodiments, the computer program may be partially or entirely loaded and/or installed in the electronic device 1200 via the ROM 1202 and/or the communication unit 1209. The computer program, when loaded in the RAM 1203 and executed by the computing unit 1201, may execute one or more steps in the vehicle control method described above. Alternatively, in other embodiments, the computing unit 1201 may be used to perform the vehicle control method by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the data processing method of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. A relationship between the client and the server is generated through computer programs running on the corresponding computers and having a client-server relationship with each other. The server may be a cloud server, a server of a distributed system, or a server combined with block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

**Claims**

1. A vehicle control method (200), comprising:

   correcting (S210) a historical control sequence generated at a historical time instant, based on a deviation between an expected driving state of a target vehicle at a current time instant and an actual driving state of the target vehicle at the current time instant, to generate a first initial control sequence, wherein the expected driving state at the current time instant is determined according to the historical control sequence; and
   performing (S220) iterative processing on the first initial control sequence under a kinematic constraint and a driving cost constraint to obtain a target control sequence, and controlling driving of the target vehicle using the target control sequence.

2. The method of claim 1, wherein the historical control sequence comprises control information for T time instants, and T is an integer greater than 1; and
wherein the correcting a historical control sequence generated at a historical time instant, based on a deviation between an expected driving state of a target vehicle at a current time instant and an actual driving state of the target vehicle at the current time instant, to generate a first initial control sequence comprises:

determining an expected driving state at a t-th time instant according to the control information for a (t-1)-th time instant, wherein t = 2, 3, ..., T-1; and
performing interpolation between the control information for adjacent time instants in the historical control sequence based on a deviation between the expected driving state at the t-th time instant and the actual driving state at the t-th time instant to generate the first initial control sequence.

3. The method of claim 2, wherein the performing interpolation between the control information for adjacent time instants in the historical control sequence based on a deviation between the expected driving state at the t-th time instant and the actual driving state at the t-th time instant to generate the first initial control sequence comprises:

determining an expected driving state at a (t+1)-th time instant according to the control information for the t-th time instant;
obtaining an interpolation coefficient according to a ratio of the deviation to a difference in expected driving states, wherein the difference in expected driving states indicates a difference between the expected driving state at the t-th time instant and the expected driving state at the (t+1)-th time instant; and
performing interpolation between the control information for adjacent time instants in the historical control sequence based on the interpolation coefficient and the control information for each time instant to obtain the first initial control sequence.

4. The method of any one of claims 1 to 3, further comprising:

generating, according to a reference lane line associated with a driving intention of the target vehicle, a second initial control sequence for controlling the target vehicle to drive along the reference lane line; and
determining an initial control sequence for iterative processing from the first initial control sequence and the second initial control sequence based on an objective function.

5. The method of claim 4, wherein the generating, according to a reference lane line associated with a driving intention of the target vehicle, a second initial control sequence for controlling the target vehicle to drive along the reference lane line comprises:

extracting a plurality of reference positions for a plurality of reference time instants from the reference lane line; and
generating the second initial control sequence according to a curvature change state of each of the plurality of reference positions on the reference lane line.

6. The method of claim 4, wherein the generating, according to a reference lane line associated with a driving intention of the target vehicle, a second initial control sequence for controlling the target vehicle to drive along the reference lane line comprises:

generating a driving state at each time instant based on the driving state of the target vehicle at the current time instant;
determining a target reference position for each time instant from the reference lane line based on the driving state at each time instant; and
processing the driving state at each time instant and the target reference position for each time instant to generate the second initial control sequence.

7. The method of claim 6, wherein the driving state comprises a driving position and a wheel steering angle of the target vehicle; and
wherein the processing the driving state at each time instant and the target reference position for each time instant to generate the second initial control sequence comprises:

determining an angle of the target reference position for a t-th time instant relative to the driving position for the t-th time instant as a heading angle of the target vehicle for the t-th time instant, wherein t = 2, 3, ..., T-1, and T is an integer greater than 1;

performing a geometric transformation on the heading angle for the t-th time instant based on a geometric relationship between the wheel steering angle and a vehicle heading angle to generate the wheel steering angle for the t-th time instant;

generating a curvature for the t-th time instant based on the wheel steering angle for the t-th time instant and a predetermined wheelbase; and

generating the second initial control sequence based on a curvature change state between the t-th time instant and a (t-1)-th time instant.

8. The method of claim 4, wherein the determining an initial control sequence from the first initial control sequence and the second initial control sequence based on an objective function comprises:

processing the first initial control sequence based on the objective function to generate a first cost value;

processing the second initial control sequence based on the objective function to generate a second cost value;

determining the first initial control sequence as the initial control sequence, in response to determining that the first cost value is less than the second cost value; and

determining the second initial control sequence as the initial control sequence, in response to determining that the first cost value is greater than or equal to the second cost value.

9. The method of claim 4, wherein the expected driving state comprises an expected position and an expected heading angle, and the reference driving state comprises a reference position and a reference heading angle; and

wherein the objective function comprises:

a reference line tracking cost function configured to constrain a position difference between the expected position and the reference position for each time instant and an angle difference between the expected heading angle and the reference heading angle for each time instant;

a target state cost function configured to constrain an error between an expected driving state at a target time instant and a target driving state;

a driving comfort cost function configured to constrain a curvature change of the expected driving state at each time instant; and

a safety cost function configured to constrain a safe driving range of the expected driving state at each time instant.

10. The method of claim 8 or 9, wherein the objective function further comprises a historical trajectory tracking cost function configured to constrain a position difference between the expected position and a historical expected position for each time instant and an angle difference between the expected heading angle and a historical expected heading angle for each time instant.

11. A vehicle control apparatus (1100), comprising:

a correction module (1110) configured to correct a historical control sequence generated at a historical time instant, based on a deviation between an expected driving state of a target vehicle at a current time instant and an actual driving state of the target vehicle at the current time instant, to generate a first initial control sequence, wherein the expected driving state at the current time instant is determined according to the historical control sequence; and

an optimization module (1120) configured to perform iterative processing on the first initial control sequence under a kinematic constraint and a driving cost constraint to obtain a target control sequence so as to control driving of the target vehicle based on the target control sequence.

12. An electronic device (1200), comprising:

at least one processor; and

a memory communicatively connected to the at least one processor, wherein the memory stores instructions executable by the at least one processor, and the instructions, when executed by the at least one processor, are configured to cause the at least one processor to implement the method of any one of claims 1 to 10.

13. An autonomous vehicle (101), comprising the electronic device (1200) of claim

14. A non-transitory computer-readable storage medium having computer instructions therein, wherein the computer instructions are configured to cause a computer to implement the method of any one of claims 1 to 10.

15. A computer program product comprising a computer program, wherein the computer program, when executed by a processor, is configured to implement the method of any one of claims 1 to 10.

<u>100</u>

FIG. 1

<u>200</u>

| A historical control sequence generated at a historical time instant is corrected based on a deviation between an expected driving state of a target vehicle for a current time instant and an actual driving state of the target vehicle at the current time instant to generate a first initial control sequence | S210 |

| Iterative processing is performed on the first initial control sequence under a kinematic constraint and a driving cost constraint to obtain a target control sequence so as to control driving of the target vehicle | S220 |

FIG. 2

FIG. 3

FIG. 4

FIG. 5

FIG. 6

T1-th time instant

T2-th time instant

T3-th time instant

Hard
constraint

Soft
constraint

FIG. 7

Nudge
direction

Obstacle

O

Ego
vehicle

FIG. 8

900 910

Information input module

| Rule parameter 911 | Solution parameter 912 | Vehicle parameter 913 |

920

Problem construction module

| Constructing a kinematic model 921 | Calculating an initial control sequence 922 | Constructing a cost function 923 | Constructing a constraint condition 924 |

930

Optimization module

| Updating an ego vehicle state setting/solving a control sequence 931 | Local linearization 932 | Backward propagation 933 | Forward propagation 934 |

940

Result evaluation and post-processing module

| Mean and variance of curvature/curvature change 941 | Deviation from target point/reference lane line 942 | Steering wheel rotation speed/number of iterations 943 | Interpolation/ backup initial control sequence 944 |

FIG. 9

FIG. 10

1100

Correction module — 1110

Optimization module — 1120

FIG. 11

1200

Computing unit — 1201

ROM — 1202

RAM — 1203

1204

I/O interface — 1205

Input unit — 1206

Output unit — 1207

Storage unit — 1208

Communi-cation unit — 1209

FIG. 12